# Europäisches Patentamt
## European Patent Office
## Office européen des brevets

(19)

(11) Veröffentlichungsnummer: **0 358 981 B1**

(12) **EUROPÄISCHE PATENTSCHRIFT**

(45) Veröffentlichungstag der Patentschrift: **08.06.94**

(51) Int. Cl.5: **H04M 3/56**

(21) Anmeldenummer: **89115389.2**

(22) Anmeldetag: **21.08.89**

(54) **Schaltungsanordnung zur Herstellung von Konferenzverbindungen in einer digitalen Zeitmultiplex-Fernmeldevermittlungsstelle.**

(30) Priorität: **07.09.88 DE 3830408**

(43) Veröffentlichungstag der Anmeldung:
**21.03.90 Patentblatt 90/12**

(45) Bekanntmachung des Hinweises auf die Patenterteilung:
**08.06.94 Patentblatt 94/23**

(84) Benannte Vertragsstaaten:
**AT BE CH DE ES FR GB GR IT LI NL SE**

(56) Entgegenhaltungen:
**EP-A- 0 163 307**
**DE-A- 2 812 387**
**GB-A- 1 409 610**
**GB-A- 2 082 875**

(73) Patentinhaber: **SIEMENS AKTIENGESELL-SCHAFT**
**Wittelsbacherplatz 2**
**D-80333 München(DE)**

(72) Erfinder: **Kaderka, Rostislav, Dipl.-Ing.**
**Kurfürstenstrasse 20**
**D-8034 Germering(DE)**
Erfinder: **Güney, Ali, Dipl.-Ing.**
**Sollingerstrasse 4/10**
**A-1190 Wien(AT)**
Erfinder: **Krumenacker, Rudolf, Dipl.-Ing.**
**Veit-Stoss-Strasse 50**
**D-8000 München 21(DE)**
Erfinder: **Nagler, Werner, Dipl.-Ing.**
**Waltrichstrasse 12**
**D-8021 Schäftlarn(DE)**

## Beschreibung

Die Erfindung betrifft eine Schaltungsanordnung zur Herstellung von Konferenzverbindungen in einer digitalen Zeitmultiplex-Fernmeldevermittlungsstelle mit einer Konferenzeinheit, die in einer den Ausgang des zyklisch einschreibbaren und wahlfrei auswählbaren Sprachspeichers der Koppelanordnung, vorzugsweise Gruppenkoppelanordnung der Vermittlungsstelle, mit dessen Eingang verbindenden Rückführungsschleife liegt, ferner mit auf den eingangsseitig und ausgangsseitig an den Sprachspeicher angeschlossenen Supermultiplexleitungen für Parallelübertragungen von PCM-Worten über die Anzahl der Zeitfächer hinaus, in denen Informationsübertragungen vo und zu der Vermittlungsstelle stattfinden (übertragungszeitfächer), zusätzlich gebildeten, unmittelbar aufeinanderfolgenden Zeitfächern (Konferenzzeitfächer), die eine der Anzahl von gleichzeitig möglichen Konferenzen gleiche Anzahl jeweils so viele Zeitfächer, wie maximal Konferenzteilnehmner pro Konferenz möglich sind, umfassende Anzahl von Gruppen bilden, sowie mit im Sprachspeicher und seinem zugehörigen Haltespeicher zusätzlich zu den im Zuge einer Vermittlung von Zweierverbindungen erforderlichen Sprachspeicher bzw. Haltespeicherzellen vorgesehenen, den genannten Konferenzzeitfächern zugeordneten Konferenzspeicherzellen, wobei im Zuge einer Konferenzverbindung die Konferenzeinheit durch wahlfreies Auslesen aus dem Sprachspeicher in Konferenzzeitfächer umgesetzte Einzelsignale der Konferenzteilnehmer empfängt und aus diesen konferenzteilnehmerindividuellen Endsummensignale bildet, die jeweils den Eigenanteil des Teilnehmers nicht enthalten und in entsprechenden Konferenzzeitfächern auf die eingangsseitige Supermultiplexleitung ausgibt, von wo aus sie beim zyklischen Einschreiben in die zugeordneten zusätzlichen Sprachspeicherzellen gelangen und wobei nach wahlfreiem Auslesen diese Endsummensignale in den Konferenzteilnehmern zugeordneten Übertragungszeitfächern auf der ausgangsseitigen Supermultiplexleitung weiterübertragen werden. Eine solche Schaltungsanordnung ist beispielsweise in der EP-A-01 63 307 beschrieben, und arbeitet nach einem Prinzip der seriellen Konferenzsummenbildung. Der in dem dortigen Konferenzsatz enthaltene Addierer ist so geartet, daß er jeweils zwei Summanden verarbeiten kann. Es werden also zunächst aus zwei Konferenzanteilen nacheinander verschiedene Zwischensummen gebildet. Diese Zwischensummen gelangen in Konferenzzeitfächern wieder an den Sprachspeicher und erfahren eine weitere Zeitkanalumsetzung in andere Konferenzzeitfächer, in denen sie wieder dem Konferenzsatz zugesendet werden. Dort wird ihnen ein weiterer Einzelkonferenzanteil eines Konferenzteilnehmers zuaddiert. In bisher noch nicht benutzten Konferenzzeitfächern gelangen diese Summensignale dann zum zweiten Mal an den Sprachspeicher. Sofern mehr als vier Konferenzteilnehmer an der Konferenz beteiligt sind, wiederholt sich die beschriebene Prozedur ein- oder mehrmals.

Darüber hinaus ist auch schon eine Schaltungsanordnung bekannt, bei der bezüglich der einzelnen Konferenzsummen eine Parallelverarbeitung erfolgt.( GB-A-14 09 610). Die Konferenzeinheit der dortigen Anordnung weist ein Addiernetzwerk auf, das aus Addierern besteht, die jeweils zwei Eingangssignale zu einem Summensignal verarbeiten und die in drei Stufen angeordnet sind. Die Einzelsignale der Konferenzteilnehmer werden dabei individuellen Registern entnommen und gelangen über individuelle Sperrgatter an das Addiernetzwerk. Das Addiernetzwerk weist einen einzigen Ausgang auf. Durch wahlweise Ansteuerung der Sperrgatter werden bei der Bildung der für die einzelnen Konferenzteilnehmer bestimmten Summen, die jeweils den Eigenanteil des Konferenzteilnehmers nicht enthalten, diese Eigenanteile ausgeblendet.

Die Aufgabe der Erfindung besteht darin, eine Schaltungsanordnung zur Herstellung von Konferenzverbindungen anzugeben, bei der die zusätzlichen Steueraufwand erfordernden Sperrglieder der genannten bekannten Anordnung vermieden sind.

Diese Aufgabe wird durch die im Kennzeichen des Patentanspruchs 1 angegebenen Mittel gelöst.

Nachstehend wird die Erfindung anhand eines Ausführungsbeispiels unter Bezugnahme auf eine Zeichnung näher erläutert.

In der Zeichnung zeigen:
Figur 1 die beispielhafte Struktur einer digitalen Zeitmultiplex-Vermittlungsstelle.
Figur 2 denjenigen Teil einer solchen Zeitmultiplexvermittlungsstelle, der die erfindungsgemäße Schaltung zugeordnet ist.
Figur 3 ein Ausführungsbeispiel der erfindungsgemäß ausgebildeten Konferenzeinheit.

Die Anschlußgruppen LTG1 bis LTGn bilden die Schnittstelle zwischen der analogen oder digitalen Umgebung der Vermittlungsstelle und dem Koppelnetz. An sie sind demnach mit Teilnehmern verbindende Teilnehmerleitungen und/oder mit anderen Vermittlungsstellen verbindende Verbindungsleitungen PCMe0 bis PCMe11 angeschlossen.

Die Anschlußgruppen enthalten als wesentliche Bestandteile, wie bei der Anschlußgruppe LTG1 im einzelnen gezeigt, Anschlußeinheiten LTU1 bis LTUx, die ihrerseits die hier nicht dargestellten Teilnehmersätze oder Leitungssätze enthalten, ferner einen Gruppenkoppler GS, eine Schnittstelleneinheit LIU, die die Schnittstelle zwischen der Anschlußgruppe und dem Koppelfeld darstellt, eine Signaleinheit SU, sowie einen Gruppenprozessor GP, der die genannten Einheiten steuert und darüber hinaus über die Teilnehmer- oder Verbindungsleitungen empfangene Wählinformationen verarbeitet und im Zusammenhang mit dem Aufbau und der Auslösung von Verbindungen mit dem Koordinatenprozessor CP in Steuerzeichenaustausch steht. Außerdem führt der Gruppenprozessor GP Routineprüfungen durch und übernimmt Überwachungsaufgaben.

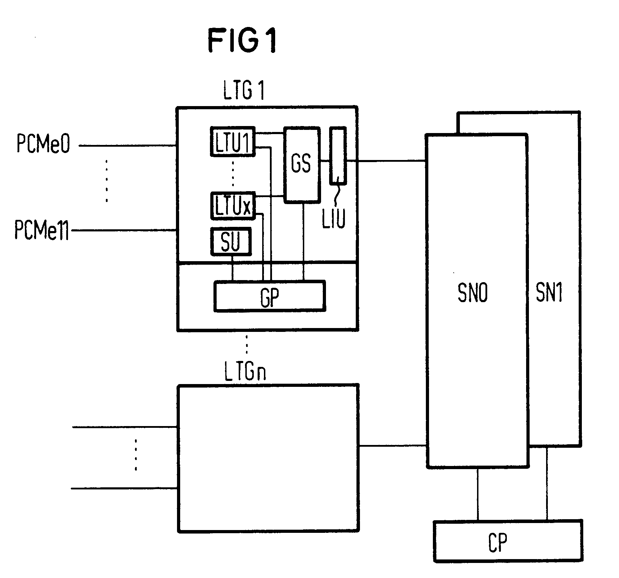

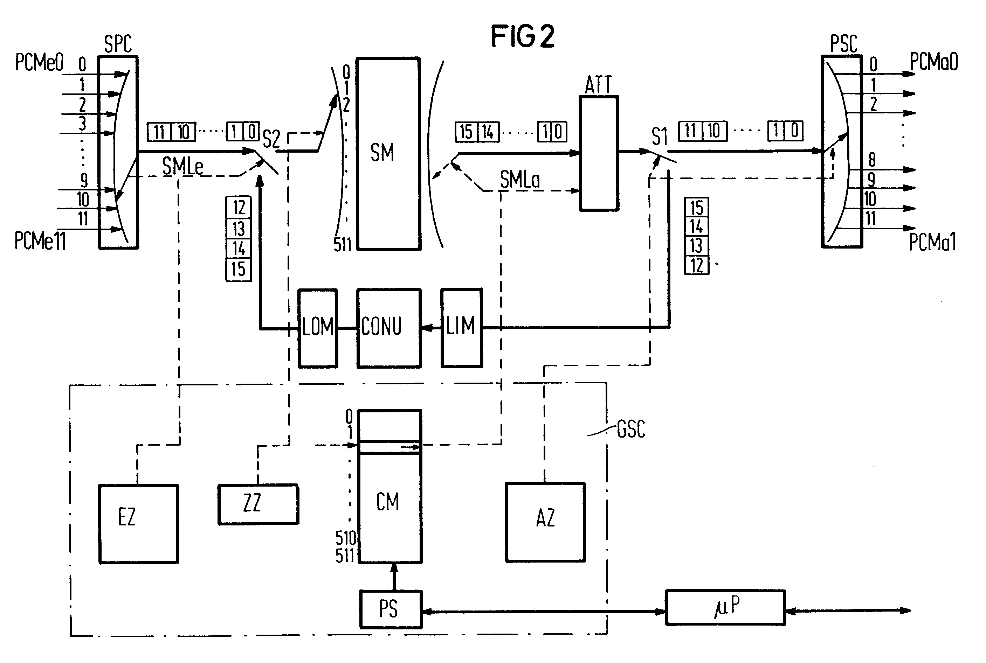

In Figur 2 ist ein hier näher interessierender Teil der Anschlußgruppe LTG der Anordnung gemäß Figur 1 mehr ins Einzelne gehend dargestellt.

Es ist der Anschluß von 12 PCM-Leitungen vorausgesetzt, auf denen jeweils 32 Zeitkanäle gebildet sind. Die Zweige für ankommende Übertragungsrichtung PCMe0 bis PCMe11 dieser PCM Leitungen sind an einen Serien-Parallel-Wandler SPC angeschlossen, der außerdem als Multiplexer wirkt, durch den die einzelnen Bits der auf den PCM-Leitungen ankommenden PCM-Wote nach einer Serien-Parallel-Wandlung unter der Voraussetzung von jeweils 8 Bit pro PCM-Wort auf die 8 Adern des Empfangszweigs SMLe einer mehradrigen Supermultiplexleitung verteilt werden und die durch Multiplexbildung auf dieser Multiplexleitung zeitlich derart verschachtelt werden, daß zunächst nacheinander die auf den PCM-Leitungen PCMe0 bis PCMe11 im Zeitkanal 0 übertragenen PCM-Worte nacheinander auftreten, dann die nacheinander im Zeitkanal 1 übertragenen usw. und schließlich die im Zeitkanal 32 übertragenen PCM-Worte.

Die Ablaufsteuerung des erwähnten Multiplexers arbeitet jedoch mit einem derart hohen Auslesetakt, daß außer den 12 x 32 = 384 Zeitfächern für die PCM-worte der 12 PCM-Leitungen, die hier als Übertragungszeitfächer bezeichnet werden, zusätzliche Zeitfächer gebildet werden, hier als Konferenzzeitfächer bezeichnet. Entsprechend einer angenommenen Maximalzahl von 4 Konferenzteilnehmern pro Konferenz und 32 gleichzeitig möglichen Konferenzen sind dies 4 x 32 zusätzliche Zeitfächer, die 32 Gruppen von jeweils 4 nacheinander auftretenden Zeitfächern bilden.

Der erwähnte Empfangszweig SMLe der Supermultiplexleitung führt zu einem Sprachspeicher SM, der zuzsammen mit der entsprechenden Ansteuerung den Gruppenkoppler GS gemäß Figur 1 bildet.

Der Sprachspeicher SM weist entsprechend der auf der Supermultiplexleitung gebildeten 384 Übertragungszeitfächer 384 Speicherzellen für jeweils 1 PCM-Wort auf. Zusätzlich, entsprechend den erwähnten zusätzlichen Konferenzzeitfächern, weist er 128 weitere Speicherzellen für jeweils 1 PCM-Wort auf, die 32 jeweils einer Konferenz zugeordnete Gruppen mit jeweils 4 Speicherzellen für 4 an einer Konferenz beteiligbare Konferenzteilnehmer bilden. Das Einschreiben in den Sprachspeicher SM von dem ankommenden Zweig SMLe der Supermultiplexleitung aus erfolgt zyklisch, das Auslesen auf den abgehenden Zweig SMLa der Supermultiplexleitung dagegen wahlfrei. Auf diesem abgehenden Zweig SMLa der Supermultiplexleitung herrschen entsprechende Verhätnisse wie auf dem ankommenden Zweig SMLe.

Die Figur 2 zeigt ferner eine Konferenzeinheit CONU, die in einer Rückführungsschleife liegt, über die bei entsprechender Schaltstellung von Umschaltern S1 und S2 der Ausgang des Sprachspeichers mit dessen Eingang verbunden ist. Eingangs der Konferenzeinheit CONU ist eine Einrichtung LIN zur Umwandlung von nichtlinearer Codedarstellung in lineare Codedarstellung angeordnet, ausgangsseitig der Konferenzeinheit eine Einrichtung KOM, die der entgegengesetzten Umwandlung von linearer Codedarstellung in nichtlinearer Codedarstellung dient.

Die dargestellte Anordnung steht unter dem Steuereinfluß einer Steuerung GSC, deren zentraler Teil ein Haltespeicher CM ist, der die Ansteueradressen für das wahlfreie Auslesen des Sprachspeichers SM liefert. Dieser Sprachspeicher enthält demnach eine gleiche Anzahl von Speicherzellen wie der Sprachspeicher SM, von denen diejenigen, die die Ansteueradressen für mit der Konferenz zusammenhängende Speicherzellen im Sprachspeicher aufnehmen, in entsprechender Zuordnung gruppiert sind, nämlich 32 Vierergruppen entsprechend 32 gleichzeitig möglichen Konferenzen mit jeweils vier Speicherzellen entsprechend vier Konferenzteilnehmern pro Konferenz enthalten. Weitere Bestandteile der Steuerung GSC dind eine Prozessorschnittstelle PS zu einem Mikroprozessor μP, ein Zähler ZZ, der Ansteueradressen für die 512 Speicherzellen des Sprachspeichers SM beim zyklischen Einschreiben liefert, ferner ein Eingabezeitlagenzähler EZ, der die Übertragungszeitfächer auf der Supermultiplexleitung für ankommende Übertragungsrichtung SMLe zählt und nach deren Verstreichen jeweils den Umschalter S2 betätigt. Schließlich ist ein Ausgabezeitlagenzähler AZ vorgesehen, der in entsprechender Weise die Übertragungszeitfächer auf der Supermultiplexleitung für abgehende Übertragungsrichtung SMLa zählt und ein Steuersignal für den Umschalter S1 liefert.

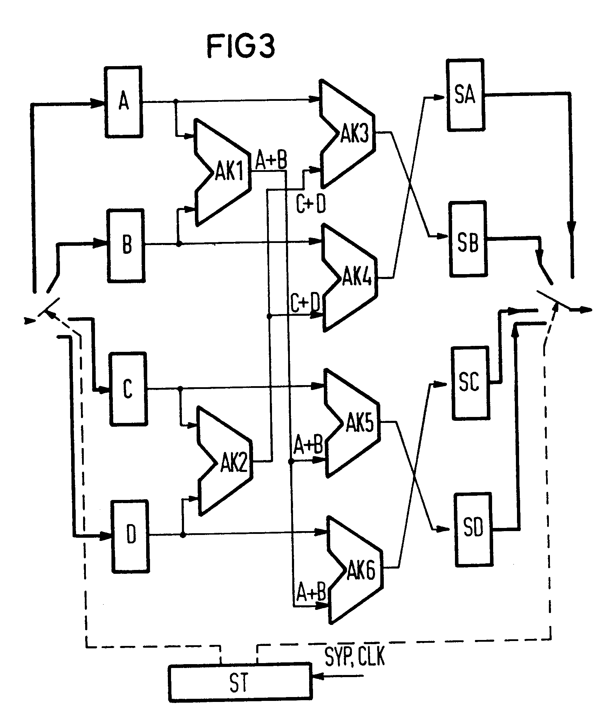

Die Figur 3 zeigt, wie die Konferenzeinheit (CONU) gemäß der Erfindung aufgebaut ist, wobei vorausgesetzt ist, daß maximal vier Konferenzteilnehmer an einer Konferenz teilnehmen können.

Die Konferenzeinheit gemäß Figur 3 weist demnach vier Zwischenregister A, B, C und D auf, in die die von den Konferenzteilnehmern stammenden Einzelsignale, die mittels des Sprachspeichers auf die entsprechenden Konferenzzeitfächer umgesetzt worden sind, zwischengespeichert werden.

Die erfindungsgemäße Konferenzeinheit weist ferner ein Addiernetzwerk auf, das aus Addierern AK1 bis AK6 besteht, die in zwei Stufen angeordnet sind, von denen die erste Stufe die Addierer AK1 und AK2 und die zweite Stufe die Addierer AK3 bis AK6 umfaßt. Der Addierer AK1 ist an die Ausgänge der Zwischenregister A und B angeschlossenen und bildet demnach aus den Einzelsignalen der Teilnehmer A und B die Teilsumme A + B. Der Addierer AK2 ist an die Zwischenregister C und D angeschlossen und bildet dementsprechend die Teilsumme C + D aus den Einzelsignalen der Konferenzteilnehmer C und D.

Dem Addierer AK3 des Addiernetzwerkes wird ebenfalls ein Einzelsignal, nämlich der Inhalt des Registers A sowie das vom Addierer AK2 abgegebene Teilsummensignal C + D zugeführt. Er liefert also ein Endsummensignal SB = A + C + D, das in einem ausgangsseitigen Zwischenregister SB zwischengespeichert wird. In entsprechender Weise erhält der Addierer AK4 aus dem Zwischenregister B ein vom Konferenzteilnehmer B geliefertes Einzelsignal sowie das mit Hilfe des Addierers AK2 gebildete Teilsummensignal C + D, woraus er die Endsumme SA = B + C + D bildet, das im ausgangsseitigen Zwischenregister SA zwischengespeichert wird. Der Inhalt des Zwischenregisters C wird zusammen mit dem vom Addierer AK1 abgegebenen Teilsummensignal A + B dem Addierer AK5 zur Bildung des Endsummensignals SD = A + B + C zugeführt, das im ausgangsseitigen Zwischenregister SD zwischengespeichert wird. Schließlich dient der Addierer AK6 dazu, aus dem Inhalt des Zwischenregisters D und dem vom Addierer AK1 abgegebenen Teilsummensignal A + B das Endsummensignal SC = A + B + D zu bilden, das im ausgangsseitigen Zwischenregister SC zwischengespeichert wird. Bei einer größeren Anzahl von maximal beteiligbaren Konferenzteilnehmern weist das Addiernetzwerk eine weitere Stufe aus Addierern auf, denen dann nur Teilsummensignale als Eingangsgrößen zugeführt werden.

Unter dem Steuereinfluß einer Steuerung St, die auch die zeitgerechte Eingabe in die erwähnten eingangsseitigen Zwischenregister A bis D bewirkt, werden die Inhalte der ausgangsseitigen Zwischenregister SA bis SD während entsprechender Konferenzzeitlagen ausgelesen.

Nachstehend wird zunächst auf die Vorgänge bei der Abwicklung einer normalen Zweierverbindung eingegangen. Es sei angenommen, daß eine Verbindung zwischen einem Teilnehmer A und einem Teilnehmer B bestehen soll, die in ihnen zugeordneten Zeitfächern auf den ankommenden Zweigen PCMe der Zeitmultiplexleitungen bzw. in den entsprechenden Übertragungszeitfächern auf der Supermultiplexleitung für ankommende Übertragungsrichtung SMLe PCM-Worte an den Sprachspeicher SM liefern, in dem diese im Zuge des zyklischen Einschreibens in diesen Zeitfächern zugeordneten Speicherzellen abgelegt werden. Durch wahlfreies Auslesen gelangen die vom Teilnehmer A stammenden PCM-Worte in die auf der Supermultiplexleitung für abgehende Übertragungsrichtung SMLa dem Teilnehmer B zugeordneten Übertragungszeitfächer, wogegen umgekehrt die vom Teilnehmer B stammenden PCM-Worte in die dem Teilnehmer A auf dieser Multiplexleitung SMLa zugeordneten Übertragungszeitfächer gelangen. Die Konferenzeinheit hat in diesem Zusammenhang keine Funktion.

Nunmehr wird auf die Vorgänge bei der Abwicklung einer Konferenz mit Hilfe der erfindungsgemäßen Schaltungsanordnung näher eingegangen. Es wird dabei angenommen, daß eine Konferenz zwischen vier Konferenzteilnehmern A, B, C und D bestehen soll, die Einzelsignale in Form entsprechender PCM-Worte in ihnen auf den ankommenden Zweigen PCMe und der Zeitmultiplexleitungen bzw. auf den entsprechenden Übertragungszeitfächern auf der Supermultiplexleitung SMLe für ankommende Übertragungsrichtung an den Sprachspeicher SM liefern, in dem diese, wie oben angegeben, durch zyklisches Einschreiben in den genannten Übertragungszeitfächern zugeordneten Speicherzellen abgelegt werden. Beim wahlfreien Auslesen der betreffenden Speicherzellen erfolgt nunmehr aber im Gegensatz zu den Verhältnissen bei der oben erläuterten Zweierverbindung, eine Umsetzung in auf der Supermultiplexleitung SMLa gebildete unmittelbar aufeinanderfolgende Konferenzzeitfächer einer der betreffenden Konferenz zugeordneten Gruppe von Konferenzzeitfächern. Über den Schalter S1, der, gesteuert durch den Zähler AZ während dieser Zeitspannen die dargestellte Schaltstellung einnimmt und über die Einrichtung LIN, die eine Linearisierung vornimmt, gelangen sie an die Konferenzeinheit CONU. Dort werden vier Endsummensignale gebildet, die jeweils das Einzelsignal desjenigen Konferenzteilnehmes, für den sie bestimmt sind, nicht enthalten. Diese Endsummensignale gelangen nach einer Zwischenspeicherung in den Zwischenspeichern SA, SB, SC und SD und einer Codewandlung von linearer Codierung in nichtlineare Codierung durch die Einrichtung KOM in entsprechenden aufeinanderfolgenden Konferenzzeitfächern über den Schalter S2, an den Eingang des Sprachspeichers SM, wo sie im Zuge des zyklischen Einschreibens in den erwähnten Konferenzzeitfächern zugeordneten Speicherzellen abgelegt werden. Durch wahlfreie Ansteuerung dieser Speicherzellen erfolgt dann eine Umsetzung auf die den erwähnten Konferenzteilnehmer A, B, C und D in auf der Supermultiplexleitung für abgehende Übertragungsrichtung SMLa für gebildete Übertragungszeitfächer, von wo aus über den nunmehr umgeschalteten Schalter S1 an den Parallel-Serienwandler PSC und von da aus an die betreffende oder die betreffenden abgehenden Zweige PCMa0 bis PCMa11 der Zeitmultiplexleitungen gelangen.

**Patentansprüche**

1. Schaltungsanordnung zur Herstellung von Konferenzverbindungen in einer digitalen Zeitmultiplex-Fernmeldevermittlungsstelle mit einer Konferenzeinheit (CONU), die in einer den Ausgang des zyklisch einschreibbaren und wahlfrei auswählbaren Sprachspeichers (SM) der Koppelanordnung, vorzugsweise Gruppenkoppelanordnung der Vermittlungsstelle, mit dessen Eingang verbindenden Rückführungsschleife liegt, ferner mit auf den eingangsseitig und ausgangsseitig an den Sprachspeicher angeschlossenen Supermultiplexleitungen (SMLe, SMLa) für Parallelübertragungen von PCM-Worten über die Anzahl der Übertragungszeitfächer hinaus, in denen Informationsübertragungen von und zu der Vermittlungsstelle stattfinden zusätzlich gebildeten, unmittelbar aufeinanderfolgenden Konferenzzeitfächern, die eine der Anzahl von gleichzeitig möglichen Konferenzen gleiche Anzahl jeweils so viele Zeitfächer, wie maximal Konferenzteilnehmer pro Konferenz möglich sind, umfassende Anzahl von Gruppen bilden, sowie mit im Sprachspeicher (SM) und seinem zugehörigen Haltespeicher (CM) zusätzlich zu den im Zuge einer Vermittlung von Zweierverbindungen erforderlichen Sprachspeicher bzw. Haltespeicherzellen vorgesehenen, den genannten Konferenzzeitfächern zugeordneten Konferenzspeicherzellen, wobei im Zuge einer Konferenzverbindung die Konferenzeinheit (CONU) durch wahlfreies Auslesen aus dem Sprachspeicher (SM) in Konferenzzeitfächer umgesetzte Einzelsignale der Konferenzteilnehmer empfängt und aus diesen konferenzteilnehmerindividuellen Endsummensignale bildet, die jeweils den Eigenanteil des Teilnehmers nicht enthalten und in entsprechenden Konferenzzeitfächern auf die eingangsseitige Supermultiplexleitung ausgibt, von wo aus sie beim zyklischen Einschreiben in die zugeordneten zusätzlichen Sprachspeicherzellen gelangen und wobei nach wahlfreiem Auslesen diese Endsummensignale in den Konferenzteilnehmern zugeordneten Übertragungszeitfächern auf der ausgangsseitigen Supermultiplexleitung weiter übertragen werden, wobei ferner die Konferenzeinheit (CONU) ein Addiernetzwerk aufweist, das aus Addierern (AK1 bis AK6) besteht, die jeweils zwei Eingangssignale zu einem Summensignal verarbeiten und in wenigstens zwei Stufen angeordnet sind, und wobei es sich bei den durch die Addierer (AK1, AK2) der ersten Stufe zu verarbeitenden Eingangssignalen um aus Zwischenregistern (A bis D) aufgenommene, von den Konferenzteilnehmern gelieferte Einzelsignale und bei den von den Addierern (AK3 bis AK6) der übrigen Stufen um jeweils ein solches Einzelsignal und jeweils ein von einem Addierer (AK1, AK2) der vorhergehenden Stufe geliefertes Teilsummensignal oder um zwei solcher Teilsummensignale handelt, **dadurch gekennzeichnet**, daß das Addiernetzwerk eine der Zahl der maximal an einer Konferenz beteiligbaren Konferenzteilnehmer gleiche Anzahl von Ausgängen aufweist, denen jeweils ein Register (SA bis SD) nachgeschaltet ist, das jeweils während einem bestimmten der Konferenzzeitfächer innerhalb der Gruppen von Konferenzzeitfächern ausgelesen wird.

**Claims**

1. Circuit for setting-up conference connections in a digital time-division multiplex telecommunication exchange comprising a conference unit (CONU) which is located in a feedback loop connecting the output of the cyclically loadable and optionally selectable voice memory (SM) of the switching system, preferably group switching system of the exchange, to its input, furthermore with conference time cells directly following one another, additionally formed on the super-multiplex lines (SMLe, SMLa), connected to the voice memory at the input end and output end, for parallel transmissions of PCM words beyond the number of transmission time cells in which information transmissions take place from and to the exchange, which conference time cells form a number of groups comprising a number, equal to the number of simultaneously possible conferences, of in each case as many time cells as conference partners are maximally possible per conference, and with conference memory cells, allocated to the said conference time cells, provided additionally to the voice memory or latch cells required during a switching of two-party connections, in the voice memory (SM) and its associated latch (CM), the conference unit (CONU) receiving individual signals of the conference partners, converted into conference time cells by optional reading-out from the voice memory (SM), during a conference connection, and forming from these conference-partner-individual final sum signals which in each case do not contain the component of the partner himself and outputs them to the super-multiplex line at the input end in corresponding conference time cells, from where they reach the associated additional voice memory cells during the cyclic loading, and, after optional reading-out, these final sum signals being further transmitted in transmission time cells allocated to the conference partners on the super-multiplex line at the output end, the conference unit (CONU) furthermore exhibiting an adding network which consists of adders (AK1 to AK6) which in each case process two input signals to form one sum signal and are arranged in at least two stages, and the input signals to be processed by the adders (AK1, AK2) of the first stage being individual signals supplied by the conference partners, received from buffer registers (A to D) and the signals to be processed by the adders (AK3 to AK6) of the remaining stages being in each case one such individual signal and in each case a part-sum signal supplied by an adder (AK1, AK2) of the preceding stage or two such part-sum signals, characterized in that the adding network exhibits a number of outputs which is equal to the number of conference partners which can be maximally involved in a conference, which outputs are in each case followed by a register (SA to SD) which is in each case read out during a particular one of the conference time cells within the groups of conference time cells.

**Revendications**

1. Montage pour l'établissement de liaisons de conférence dans un central numérique de télécommunication à multiplexage temporel, comportant une unité de conférence (CONU), qui est située dans une boucle de réaction, qui relie la sortie de la mémoire de signaux vocaux (SM), qui peut être enregistrée cycliquement et peut être sélectionnée librement, du dispositif de couplage, de préférence un dispositif de couplage de groupe du central, à l'entrée de la mémoire, et comportant en outre des lignes de super-multiplexage (SMLe, SMLa), qui sont raccordées côté entrée et côté sortie à la mémoire de signaux vocaux, pour des transmissions en parallèle de mots MIC en un nombre dépassant le nombre des créneaux temporels de transmission, dans lesquels interviennent des transmissions d'informations en provenance et en direction du central, en plus de créneaux temporels de conférence formés en supplément et se succédant directement et qui forment un nombre de groupes, qui est égal au nombre de conférences possibles simultanément et comprend respectivement autant de créneaux temporels que le nombre maximum possible d'abonnés pour chaque conférence, et comportant des cellules de mémoire de conférence, qui sont prévues dans la mémoire de signaux vocaux (SM) et dans sa mémoire de maintien associée (CM), en plus des mémoires de signaux vocaux ou des cellules de la mémoire de maintien, qui sont nécessaires au cours d'une commutation de liaisons doubles, et dans lequel au cours d'une liaison de conférence l'unité de conférence (CONU) reçoit, grâce à une lecture exécutée au choix à partir de la mémoire de signaux vocaux (SM), des signaux individuels, amenés par conversion dans des créneaux temporels de conférence, des abonnés participant à la conférence et forment, à partir de ces signaux concernant individuellement les abonnés participant à la conférence, des signaux de somme finale, qui ne contiennent respectivement pas la partie propre de l'abonné, et délivre ces signaux, dans des créneaux temporels correspondants de conférence, à la ligne de super-multiplexage située côté entrée, d'où ils parviennent, lors de l'enregistrement cyclique, dans les cellules supplémentaires associées de la mémoire de signaux vocaux, et dans lequel, après une lecture effectuée au choix de ces signaux de somme finale, la transmission se poursuit dans des créneaux temporels de transmission associé aux abonnés participant à la conférence, dans la ligne de supermultiplexage située côté sortie, et dans lequel en outre l'unité de conférence (CONU) possède un réseau d'additionneurs, qui est constitué par des additionneurs (AK1 à AK6), qui traitent respectivement deux signaux d'entrée pour former un signal somme et sont disposés dans au moins deux étages, et dans lequel, en ce qui concerne les signaux d'entrée devant être traités par les additionneurs (AK1, AK2) du premier étage, il s'agit de signaux individuels reçus à partir de registres intermédiaires (A à D) et délivrés par les abonnés participant à la conférence et qu'en ce qui concerne les signaux d'entrée devant être traités par les additionneurs (AK3 à AK6) des autres étages, il s'agit respectivement d'un tel signal individuel et respectivement d'un signal de somme partielle, délivré par un d'additionneurs (AK1, AK2) de l'étage précédent, ou de deux tels signaux de somme partielle, caractérisé par le fait que le réseau d'additionneurs comporte un nombre, identique au maximum d'abonnés pouvant participer à une conférence, de sorties en aval desquelles sont branchés des registres (SA à SD), qui sont lus chacun pendant l'un déterminé des créneaux temporels de conférence à l'intérieur des groupes de créneaux temporels de conférence.

# FIG 1

LTG 1

PCMe0

PCMe11

LTU1

LTUx

SU

GS

LIU

GP

LTGn

SN0

SN1

CP

FIG 2

EP 0 358 981 B1

FIG 3